# EUROPÄISCHE PATENTANMELDUNG

(11) **EP 2 236 250 A2**
(43) Veröffentlichungstag der Anmeldung: **06.10.2010**
(21) Anmeldenummer: 10002156.7
(22) Anmeldetag: 03.03.2010
(51) Int. Cl.: B25F 5/00

(54) **Antriebsstrang für eine Maschine und damit ausgestattete Maschine**

(30) Priorität: 31.03.2009 DE 102009015091
(71) Anmelder: Festool GmbH, 73240 Wendlingen (DE)
(72) Erfinder: Zimmermann, Paul, 73207 Plochingen (DE); Mosthaf, Thomas, 73728 Esslingen (DE)
(74) Vertreter: Bregenzer, Michael

(57) **Zusammenfassung**

Die Erfindung betrifft einen Antriebsstrang (11) für eine portable, insbesondere elektrische Maschine, insbesondere eine Hand-Werkzeugmaschine (10), mit mindestens einer Drehantriebskomponente (30), die mit einem Lager (18) um eine Drehachse (38) drehbar gelagert ist, das in einer Lager-Aufnahme (46) aufgenommenen ist. Die Erfindung betrifft ferner eine damit ausgestattete portable elektrische Maschine, insbesondere eine Hand-Werkzeugmaschine (10). Bei dem Antriebsstrang (11) ist vorgesehen, dass für eine radial gepufferte relative Radialauslenkung der Drehantriebskomponente (30) zu der Lager-Aufnahme (46) oder umgekehrt zwischen einerseits dem Lager (18) und andererseits der Lager-Aufnahme (46) und/oder der Drehantriebskomponente (30) eine elastische Puffereinrichtung (50) mit einem sich zumindest über einen Teilumfang des Lagers (18) erstreckenden Radialpuffer (51) angeordnet ist, und dass zur Begrenzung der relativen Radialauslenkung im Bereich des Lagers (18) eine Radialanschlaganordnung (64) mit mindestens einem Radialanschlag (63) vorgesehen ist, der im Ruhezustand des Antriebsstrangs (11) in einem Radialabstand zu dem Lager (18) angeordnet ist und die relative Radialauslenkung der Drehantriebskomponente (30) oder der Lager-Aufnahme (46) im Bereich des Lagers (18) auf einen Radialpufferweg begrenzt.

## Beschreibung

Die Erfindung betrifft einen Antriebsstrang für eine portable Maschine, insbesondere eine Hand-Werkzeugmaschine, mit mindestens einer Drehantriebskomponente, die mit einem Lager um eine Drehachse drehbar gelagert ist, das in einer Lager-Aufnahme aufgenommenen ist. Die Erfindung betrifft ferner eine mit einem solchen Antriebsstrang ausgestattete portable, insbesondere elektrische Maschine, z.B. ein Elektro-Werkzeug, insbesondere eine Hand-Werkzeugmaschine, ein Sauggerät, einen Kompressor oder dergleichen.

Eine derartige Hand-Werkzeugmaschine ist aus DE 10 2007 021 395 A1 bekannt. Bei der aus dieser Druckschrift bekannten Hand-Werkzeugmaschine sind beispielsweise zwei Motorlager vorgesehen, wobei ein getriebeseitiges Lager in einer Lager-Aufnahme am Getriebegehäuse angeordnet ist. Impulsartige Stöße, die beispielsweise vom zu bearbeitenden Werkstück auf den Antriebsstrang des maschinellen Werkstückes zurückwirken und dort zu radialen Beanspruchungen des Lagers für die Drehantriebskomponente führen. Auch Unwuchten, die beispielsweise durch Fertigungstoleranzen, durch ein Werkzeug, insbesondere ein verschlissenes Werkzeug entstehen können, das durch den Antriebsstrang angetrieben wird, können sich bis in den Antriebsstrang hinein auswirken und dort beispielsweise eine Radialbeanspruchung des Drehlagers, der Drehantriebskomponente oder auch der Lager-Aufnahme zur Folge haben, so dass der Antriebsstrang vorzeitig verschleißt oder gar beschädigt wird.

Es ist daher die Aufgabe der vorliegenden Erfindung, einen Antriebsstrang sowie eine damit ausgestattete portable Maschine mit einer verbesserten Drehlagerung für eine Drehantriebskomponente bereitzustellen.

Zur Lösung der Aufgabe ist bei einem Antriebsstrang eingangs genannten Art vorgesehen, dass für eine radial gepufferte relative Radialauslenkung der Drehantriebskomponente zu der Lager-Aufnahme oder umgekehrt zwischen einerseits dem Lager und andererseits der Lager-Aufnahme und/oder der Drehantriebskomponente eine elastische Puffereinrichtung mit einem sich zumindest über einen Teilumfang des Lagers erstreckenden Radialpuffer angeordnet ist, und dass zur Begrenzung der relativen Radialauslenkung im Bereich des Lagers eine Radialanschlaganordnung mit mindestens einem Radialanschlag vorgesehen ist, der im Ruhezustand des Antriebsstrangs in einem Radialabstand zu einer ihm zugeordneten Anschlagfläche, insbesondere zu dem Lager, angeordnet ist und die relative Radialauslenkung der Drehantriebskomponente oder der Lager-Aufnahme im Bereich des Lagers auf einen Radialpufferweg begrenzt. Zur Lösung der Aufgabe dient auch eine mit einem solchen Antriebsstrang ausgestattete Maschine.

Ein Grundgedanke der Erfindung ist es, dass Drehlager an der Lager-Aufnahme elastisch gepuffert zu lagern, so dass Radialauslenkungen des Lagers bezüglich der Lager-Aufnahme möglich sind. Dadurch ist die Beanspruchung des Lagers, der Lager-Aufnahme sowie der Drehlagerkomponente, beispielsweise einer Abtriebswelle eines Antriebsmotors, verringert. Es versteht sich, dass das erfindungsgemäße Konzept, das die nachfolgend noch im Detail beschriebenen vorteilhaften Ausgestaltungen aufweisen kann, nicht nur zur Lagerung von Antriebswellen oder Abtriebswellen geeignet ist, sondern beispielsweise auch zur Lagerung von Zahnrädern oder dergleichen. Zwar wird beim nachfolgend beschriebenen Ausführungsbeispiel die Erfindung im Zusammenhang mit einem Elektro-Werkzeug dargestellt. Ein erfindungsgemäßer Antriebsstrang kann aber auch beispielsweise bei Druckluft-Werkzeugen, Sauggeräten und dergleichen eingesetzt werden.

Vorzugsweise hat die Puffereinrichtung eine Anschlagsausnehmung zur Aufnahme zumindest eines Abschnitts des mindestens einen Radialanschlags, vorzugsweise zur Aufnahme des gesamten Radialanschlags. Durch diese Maßnahme ist es vorteilhaft auch möglich, eine Verdrehsicherung, eine Verschiebesicherung oder dergleichen zu realisieren, so dass die Puffereinrichtung von dem mindestens einen Radialanschlag verdrehgesichert und/oder verschiebegesichert ist. Ferner ermöglicht diese Maßnahme, den Radialanschlag möglichst nahe bei dem das Lager puffernden Abschnitt der Puffereinrichtung, beispielsweise bei dem Radialpuffer als Ganzes oder eines Abschnittes davon, anzuordnen.

Vorzugsweise hat die Radialanschlaganordnung mehrere, im Wesentlichen ringförmig an einem Innenumfang der Lager-Aufnahme und/oder einem Außenumfang des Lagers angeordnete und Umfangsabstände zueinander aufweisende Radialanschläge. Diese sind beispielsweise als Anschlagvorsprünge, Nasen oder dergleichen ausgestaltet. Die Radialanschläge können sich über Teilumfänge des Lagers oder der Lager-Aufnahme erstrecken. Vorzugsweise sind die Radialanschläge verhältnismäßig schmal. Zwar wäre es möglich, nur zwei diskrete Radialanschläge vorzusehen, die einen Umfangsabstand zueinander aufweisen. Bevorzugt sind jedoch drei oder vier Radialanschläge, die zweckmäßigerweise einen im Wesentlichen gleichen Drehwinkelabstand zueinander aufweisen.

Es versteht sich, dass z.B. als ein einziger Radialanschlag auch ein ringförmiger Radialanschlag sein kann. Bevorzugt ist es jedenfalls, wenn der Radialanschlag oder die Radialanschläge unmittelbar neben dem Radialpuffer angeordnet sind, um dessen Radialpufferweg zu begrenzen.

Die Puffereinrichtung hat zweckmäßigerweise mehrere, im Wesentlichen ringförmig an einem Außenumfang und/oder Innenumfang angeordnete und Umfangsabstände zueinander aufweisende Anschlagausnehmungen. Diese Maßnahme korrespondiert mit der vorigen Ausgestaltung, dass mehrere, Umfangsabstände aufweisende Radialanschläge vorgesehen sind.

Zwischen den Anschlagausnehmungen sind zweckmäßigerweise Umfangssegmente vorgesehen. Diese Umfangssegmente weisen im Ruhezustand des Antriebsstrangs zweckmäßigerweise einen Radialabstand zum Lager und/oder der Lager-Aufnahme auf. Somit sind die Umfangssegmente gegenüber Radialauslenkungen z.B. des Lagers, der Lager-Aufnahme oder der Drehantriebskomponente zumindest im Wesentlichen unwirksam. Es kann jedoch vorgesehen sein, dass diese Umfangssegmente eine zusätzliche Radialpuffereigenschaft aufweisen. Beispielsweise werden eines oder mehrere der Umfangssegmente am Ende der Radialauslenkung des jeweiligen Bauteils, z.B. des Lagers, wirksam und verstärkt die Pufferwirkung des Radialpuffers, so dass das jeweilige Bauteil, z.B. das Lager, mit geringerer Radialkraft am mindestens einen Radialanschlag anschlägt.

Der Radialanschlag oder die Radialanschläge bilden zweckmäßigerweise eine Verdrehsicherung für die Puffereinrichtung bezüglich der Lager-Aufnahme und/oder des Lagers. Dabei sei erwähnt, dass die Radialanschlaganordnung sowohl am Lager als auch an der Lager-Aufnahme oder beiden angeordnet sein können. Beispielsweise ist der Radialanschlag oder die Radialanschläge im Umfangsrichtung mit der Lager-Aufnahme oder dem Lager einerseits und mit der Puffereinrichtung andererseits in Eingriff. Bezüglich der Lager-Aufnahme oder des Lagers ist die Verdrehsicherung vorzugsweise dadurch realisiert, dass der mindestens eine Radialanschlag mit dem Lager oder der Lager-Aufnahme einstückig ist. Es versteht sich, dass die Radialanschlaganordnung auch eine separate, beispielsweise an dem Lager oder der Lager-Aufnahme anordenbare Komponente oder Baugruppe sein kann.

Die Puffereinrichtung weist zweckmäßigerweise einen Axialpuffer auf. Dieser Axialpuffer ist zweckmäßigerweise in Richtung der Drehachse wirksam. Es versteht sich, dass eine Axialpufferung auch schräg zu dieser Drehachse prinzipiell möglich ist.

Der Radialpuffer und der Axialpuffer sind zweckmäßigerweise miteinander verbunden, beispielsweise als einstückige Baueinheit. Aber auch ein Verkleben, Verschweißen oder dergleichen der beiden Komponenten Radialpuffer und Axialpuffer ist ohne Weiteres möglich.

Für eine ortsnahe Wirkung des Radialanschlags oder der Radialanschläge ist es vorteilhaft, wenn die Radialanschlaganordnung zumindest teilweise zwischen dem Radialpuffer und dem Axialpuffer angeordnet ist. Es versteht sich, dass beispielsweise bezüglich der Drehachse beidseits des Radialpuffers jeweils Radialanschläge vorgesehen sein können. Gleichermaßen ist es möglich, dass die Puffereinrichtung zwei oder mehr Axialpuffer, zweckmäßigerweise an einander entgegengesetzten Seiten des Radialanschlags aufweist.

Ein Verbindungsabschnitt zwischen dem Radialpuffer und dem Axialpuffer erstreckt sich zweckmäßigerweise zwischen dem mindestens einen Radialanschlag und dem Lager oder Lager-Aufnahme. Der Verbindungsabschnitt ist zweckmäßigerweise in radialer Richtung dünner oder kürzer als der Radialpuffer, so dass er dessen Pufferwirkung nicht beeinträchtigt. Die direkte Verbindung zwischen Radialpuffer und Axialpuffer ermöglicht eine vereinfachte Montage. Zudem wird ein Anschlagen des Lagers am Radialanschlag oder der Lager-Aufnahme am Radialanschlag durch den Verbindungsabschnitt, der zweckmäßigerweise elastisch ist, gepuffert.

Die Puffereinrichtung bildet zweckmäßigerweise eine Aufnahme für das Lager. Dies vereinfacht die Montage. Der Axialpuffer bildet bei dieser Konfiguration zweckmäßigerweise einen Endanschlag für das Lager.

Der Radialpuffer und/oder der Axialpuffer sind zweckmäßigerweise ringförmig. Es versteht sich, dass der Radialpuffer auch beispielsweise Kreissegmente oder Ringsegmente aufweisen kann.

Die Puffereinrichtung als Ganzes ist zweckmäßigerweise buchsenförmig oder ringförmig.

Nachfolgend wird ein Ausführungsbeispiel der Erfindung anhand der Zeichnung erläutert. Es zeigen:
- Figur 1: eine teilweise geschnittene perspektivische Seitenansicht einer erfindungsgemäßen Hand-Werkzeugmaschine,
- Figur 2: einen Antriebsstrang der Werkzeugmaschine gemäß Figur 1,
- Figur 3: eine etwa entlang einer Schnittlinie A-A in Figur 1 geschnittene Querschnittsansicht eines Teils des Antriebsstranges der Werkzeugmaschine gemäß Figur 1, nämlich eines Getriebegehäuses und eines vorderen Endes einer Abtriebswelle des Antriebs-motors, etwa entsprechend einem Ausschnitt B in Figur 2,

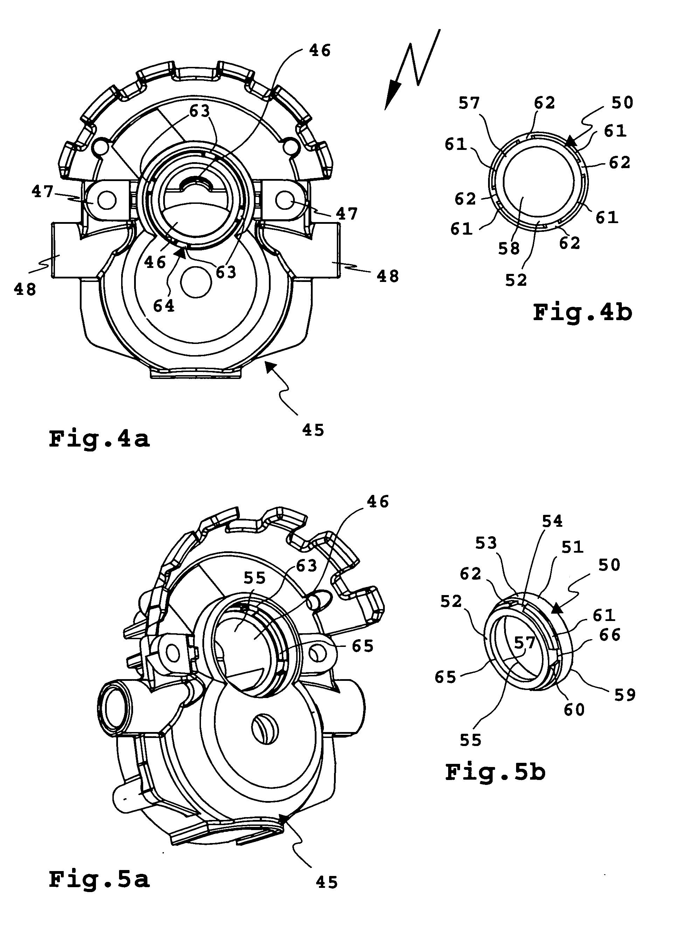

- Figur 4a: eine Frontal-Rückansicht eines Getriebegehäuses des Antriebsstranges gemäß Figur 2 und
- Figur 4b: eine Puffereinrichtung für den in Figur 3 teilweise dargestellten Antriebsstrang frontal von hinten,
- Fig. 5a, 5b: Schräg-Ansichten des Getriebegehäuses und der Puffereinrichtung gemäß Figuren 4a, 4b,

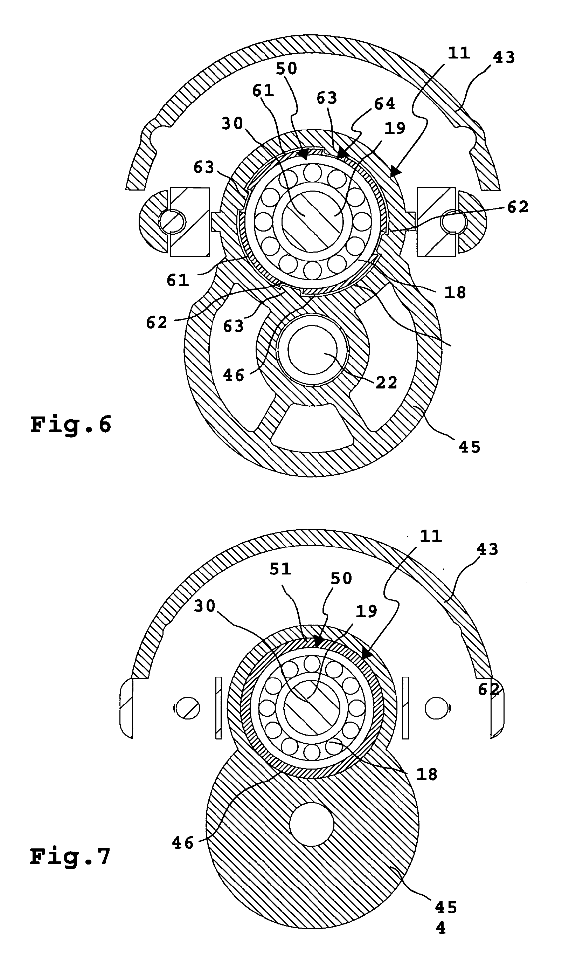

- Figur 6: eine Schnittansicht des Antriebsstrangs gemäß Figur 3, etwa entsprechend einer Schnittlinie C in Figur 3, und
- Figur 7: eine Schnittansicht des Antriebsstrangs gemäß Figur 3, jedoch entlang einer Schnittlinie D-D in Figur 3.

Eine Hand-Werkzeugmaschine 10 hat einen Antriebsstrang 11 mit einem elektrischen Antriebsmotor 12. Die Hand-Werkzeugmaschine 10 ist beispielsweise eine Poliermaschine. Der Antriebsmotor 12 treibt über ein Getriebe 13 ein Werkzeug 14, beispielsweise einen Polierteller, an, das von einer Werkzeugaufnahme 15 der Hand-Werkzeugmaschine 10 gehalten wird.

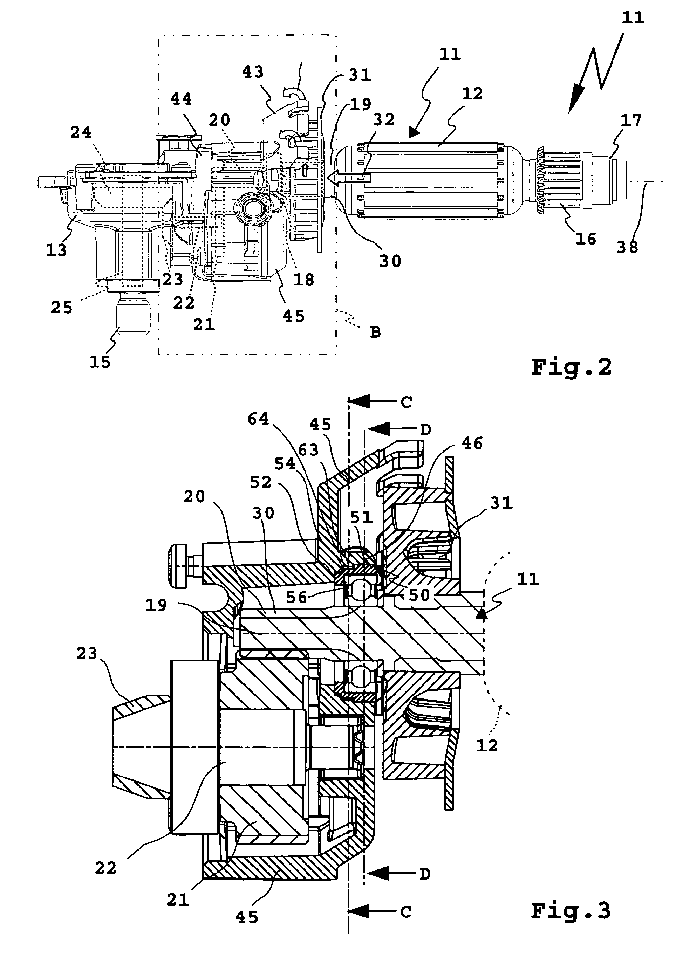

Der Antriebsmotor 12 enthält einen Kollektor 16 und ist an Lagern 17, 18 drehbar gelagert. Das Lager 18 ist ein Lager für eine Abtriebswelle 19 und somit eine Drehantriebskomponente 30, die das in Figur 2 schematisch dargestellte Getriebe 13 antreibt.

Ein Ritzel 20 am vorderen Ende der Abtriebswelle 19 kämmt mit einem Zahnrad 21, das zusammen mit einem Kegelrad 23 auf einer Welle 22 drehbar gelagert ist. Das Kegelrad 23 wiederum treibt ein Kegelrad 24 an einer Werkzeugspindel 25. Am vorderen Ende der Werkzeugspindel 25 ist die Werkzeugaufnahme 15 angeordnet. Die Kegelräder 23, 24 bilden ein Winkelgetriebe, während die Getriebebauteile 20, 21 die Drehzahl des Antriebsmotors 12 reduzieren, der verhältnismäßig schnell dreht.

Ein Bediener kann die Hand-Werkzeugmaschine 10 mit einer Hand an einem hinteren Handgriffbereich 28 ergreifen, wo ein Schalter 29 zum Ein- und Ausschalten des Antriebsmotors 12 angeordnet ist. Die andere Hand des Bedieners ergreift die Werkzeugmaschine 10 in vorderen Bereichen des Gehäuses 26 näher beim Werkzeug 14, vorzugsweise am vorderen Handgriffbereich 27, um die Hand-Werkzeugmaschine 10 zu führen.

Vor dem Handgriffbereich 27 befindet sich oberhalb der Werkzeugspindel 25 bzw. des Getriebes 13 an der Oberseite des Gehäuses 26 ein vorderer Handgriffbereich 35. Dort kann ein Bediener die Werkzeugmaschine 10 führen und beispielsweise eine Druckkraft auf das Werkzeug 14 ausüben. Zwischen den Handgriffbereichen 27 und 35 kann die Werkzeugmaschine 10 auch an einem an der Oberseite des Gehäuses 26 angeordneten Handgriffbereich 70 ergriffen werden.

Ein vom Antriebsmotor 12 angetriebenes Lüfterrad 31 erzeugt einen Kühlluftstrom 32, der durch Luftschlitze 33 einer Lufteinlassanordnung 34 des Gehäuses 26 in das Gehäuse 26 einströmt. Die Lufteinlassanordnung 34 ist im Bereich des Lagers 17 angeordnet, sodass der Kühlluftstrom 32 dieses unmittelbar kühlt. Die Lufteinlassanordnung 34 ist zwischen den Handgriffbereichen 27, 28 angeordnet.

Der Kühlluftstrom 32 strömt von der Lufteinlassanordnung 34 her an dem Antriebsmotor 12 vorbei, siehe Pfeile 36. Ein Teil 41 des Kühlluftstromes 32 strömt unmittelbar durch Luftschlitze 39 einer Luftauslassanordnung 40 des Gehäuses 26 aus. Ein anderer Teil 42 des Kühlluftstromes 32, der von dem Lüfterrad 31 nach radial außen ausgeblasen wird, dient zum Kühlen eines Kühlkörpers 43, der z.B. zur Kühlung des Lagers 18 und des Getriebes 13 vorgesehen ist, dessen Getriebegehäuse 44 mit dem Kühlkörper 43 verbunden ist. Beispielsweise ist der Kühlkörper 43 Bestandteil eines Getriebegehäusedeckels 45.

Das Lager 18 ist in einer Lager-Aufnahme 46 angeordnet. Eine in der Zeichnung nicht dargestellte Gegenhalterung für das Lager 18, beispielsweise ein Haltebügel, ist an Halteaufnahmen 47 des Getriebegehäuses 44 angeschraubt. Die Halteaufnahmen 47 sind zweckmäßigerweise zur Lager-Aufnahme 46 hin konisch schräg, sodass die Montage und Zentrierung der nicht dargestellten Gegenhalterung vereinfacht ist. Eine Stirnwand des Kühlkörpers 43 erstreckt sich von der Lager-Aufnahme 46 nach radial außen. Das Lüfterrad 31 ist nahe bei dem Lager 18 auf der Abtriebswelle 19 angeordnet.

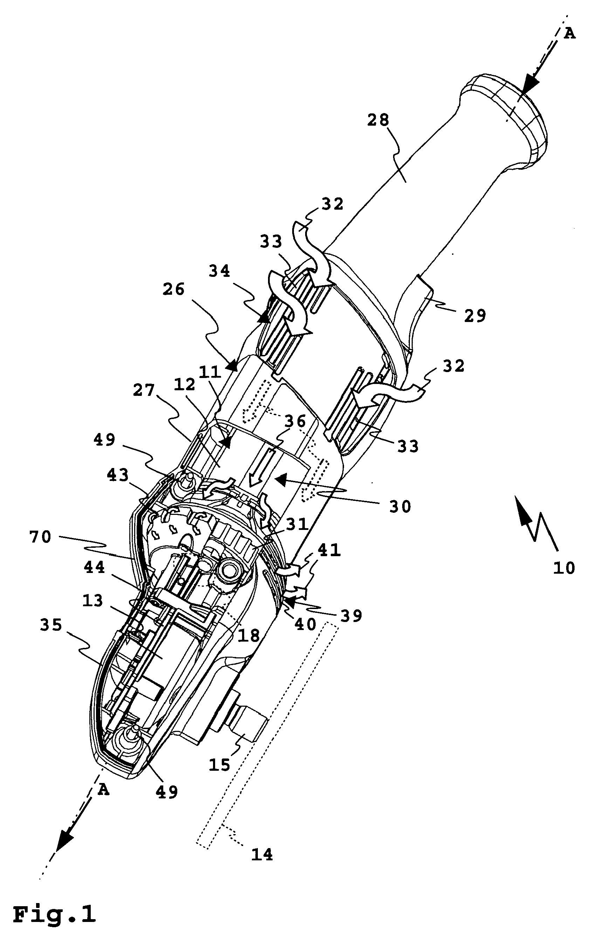

Das Getriebegehäuse 44 ist mit Halterungen 48 an dem Gehäuse 26 befestigt. In die Halterungen 48, die beispielsweise als Aufnahmen ausgestaltet sind, stehen nicht dargestellte Vorsprünge am Gehäuse 26 vor. Das Gehäuse 26 weist beispielsweise zwei Gehäusehälften auf, von denen die in Figur 1 vordere Gehäusehälfte teilweise aufgeschnitten ist. Die Gehäusebestandteile des Gehäuses 26 sind beispielsweise mit Befestigungsmitteln 49, zum Beispiel Schrauben, miteinander verbunden.

Die Lager-Aufnahme 46 ist eine ringförmige Aufnahme. Die Lager-Aufnahme 46 ist beispielsweise am Getriebegehäusedeckel 45 des Getriebegehäuses 44 vorgesehen. Es versteht sich, dass bei einer erfindungsgemäßen portablen Maschine die jeweilige Drehantriebskomponente bezüglich einer anderen ortsfesten, insbesondere gehäusefesten Lager-Aufnahme aufgenommen sein kann.

Die Abtriebswelle 19 durchdringt das Lager 18, wobei ihr vorderes, freies Ende mit dem Ritzel 20 versehen ist. Das Lager 18 ist beim Ausführungsbeispiel ein Kugellager, wobei auch Wälzlager, Rollenlager oder dergleichen vorgesehen sein könne. Bei einer Hand-Werkzeugmaschine gemäß DE 10 2007 012 395 A1, deren Antriebsstrang im Wesentlichen denselben Aufbau hat, ist ein dem Lager 18 entsprechendes Lager unmittelbar an einer der Lager-Aufnahme 46 entsprechenden Lager-Aufnahme gelagert. Eine Radialauslenkung der Drehantriebskomponente 30 bzw. der Abtriebswelle 19 oder der Lager-Aufnahme 46 lässt diese Konfiguration nicht zu. Demgegenüber ist der Antriebsstrang 11 gemäß der Erfindung verbessert:

Zwischen dem Lager 18 und der Lager-Aufnahme 46 ist eine elastische Puffereinrichtung 50 angeordnet. Die Puffereinrichtung 50 puffert eine radiale Auslenkung der Drehantriebskomponente 30 im Bereich des Lagers 18 und/oder eine Radialauslenkung der Lager-Aufnahme 46 bezüglich der Drehantriebskomponente 30 jeweils bezüglich einer Drehachse 38, um die die Drehantriebskomponente 30 dreht. Hierfür ist ein zweckmäßigerweise im Wesentlichen ringförmiger Radialpuffer 51 der Puffereinrichtung 50 vorgesehen.

Aber auch ein Axialspiel bzw. eine axiale Auslenkung der Drehantriebskomponente 30 relativ zur Lager-Aufnahme 46 oder umgekehrt wird von der Puffereinrichtung 50 gepuffert, wofür ein Axialpuffer 52 vorgesehen ist. Der Axialpuffer 52 und der Radialpuffer 51 sind ringförmig.

Der Radialpuffer 51 und der Axialpuffer 52 sind durch einen Verbindungsabschnitt 54 der Puffereinrichtung 50 bzw. der Pufferbuchse 53 miteinander verbunden.

Der Radialpuffer 51 und der Axialpuffer 52 werden einstückig durch eine Pufferbuchse 53 gebildet.

Die Puffereinrichtung 50 bildet eine Aufnahme 55 für das Lager 18. Eine vom Antriebsmotor 12 abgewandte Stirnseite 56 des Lagers 18 liegt an einer Anschlagfläche 57 der Puffereinrichtung 50 im Wesentlichen flächig an. Die Anschlagfläche 57 ist eine ringförmige Fläche des ebenfalls ringförmigen Axialpuffers 52, die zu einem Innenraum 58 der Puffereinrichtung 50 hin gerichtet ist. Der Innenraum 58 ist im Wesentlichen hohlzylindrisch und nimmt das zylindrische Lager 18 entsprechend auf.

Im Gegensatz zum Innenraum 58 ist die Puffereinrichtung 50 außenseitig stufig ausgestaltet. Ein Außenumfang 59 des Radialpuffers 51 ist größer als ein Außenumfang 60 des Axialpuffers 52.

Am Verbindungsabschnitt 54 sind Kreissegmente oder Umfangssegmente 61 angeordnet, deren Außendurchmesser kleiner ist als der Außenumfang 59 des Radialpuffers 51. Die Umfangssegmente 61 erstrecken sich teilweise zum Außenumfang 60 des Axialpuffers 52 hin.

Zwischen den Umfangssegmenten 61 sind Anschlagausnehmungen 62 vorgesehen, in die Radialanschläge 63 einer Radialanschlaganordnung 64 eingreifen. Die Radialanschläge 63 sind nasenartig. Die Radialanschläge 63 stehen vor eine innere Stirnseite 65 der Lager-Aufnahme 46 vor. Der Axialpuffer 52 liegt an dieser Stirnseite 65 im montierten Zustand des Antriebsstrangs 11 an. Die Radialanschläge 63 sind im Wesentlichen gleichmäßig, d.h. mit gleichem Winkelabstand, am Innenumfang der Lager-Aufnahme 46 angeordnet und begrenzen eine Radialauslenkung des Lagers 18 und somit eine Radialauslenkung der Drehantriebskomponente 30 im Bereich des Lagers 18 auf einen Radialpufferweg.

Im Bereich der Anschlagausnehmungen 62 weist der Verbindungsabschnitt 54 dünne Wände 66 auf, die zwischen den Radialanschlägen 63 und dem Außenumfang des Lagers 18 angeordnet sind.

Zwischen den Wänden 66 und den Radialanschlägen 63 ist zweckmäßigerweise im Ruhezustand des Antriebsstrangs 11 ein Abstand vorhanden. Somit kann der Radialpuffer 51 zumindest einen Radialpufferweg entsprechend diesem Abstand zulassen. Zudem sind die Wände 66 verhältnismäßig dünn, so dass sie zwar eine gewisse Elastizität aufweisen und somit einen elastischen Pufferweg zulassen, wobei dieser allerdings im Vergleich zu dem Pufferweg, den der Radialpuffer 51 ermöglicht, wesentlich kleiner ist.

Die Montage der Puffereinrichtung 50 verläuft folgendermaßen. Beispielsweise wird die Puffereinrichtung 50 in die Lager-Aufnahme 46 eingesteckt, wobei die Radialanschläge 63 in die Anschlagausnehmungen 62 eingreifen. Vorzugsweise sind die Radialanschläge 63 und/oder die Anschlagausnehmungen 62 mit Schrägflächen versehen, was das Einstecken erleichtert. Es ist möglich, dass die Puffereinrichtung 50 zunächst auf das Lager 18, das zweckmäßigerweise fest auf der Drehantriebskomponente 30 bzw. der Abtriebswelle 19 sitzt, aufgesteckt wird, bevor beide Komponenten als Ganzes in die Lager-Aufnahme 46 eingesteckt werden.

Die Radialanschläge 63 bilden eine Verdrehsicherung der Puffereinrichtung 50 relativ zur Lager-Aufnahme 46. Ansonsten liegt die Puffereinrichtung 50 zweckmäßigerweise mit ihrem Innenumfang reibschlüssig am Außenumfang des Lagers 18 an, so dass insofern dort keine oder zumindest nur eine geringe Verdrehung möglich ist, was den Verschleiß verringert.

Im Zusammenhang der Erfindung ist noch anzumerken, dass zwar beim Ausführungsbeispiel ein Lager (das Lager 18) eine Radialauslenkung bezüglich einer feststehenden Lager-Aufnahme (Lager-Aufnahme 46) durchführt - oder umgekehrt die Lager-Aufnahme bezüglich des Lagers. Eine Puffereinrichtung könnte aber auch beispielsweise zwischen einem Lager und einer Drehantriebskomponente vorgesehen sein. So wäre es beispielsweise denkbar, dass am Innenumfang eines des dem Lager 18 entsprechenden Lager und/oder Außenumfang der Drehantriebskomponente mindestens ein Radialanschlag oder Radialanschläge in der Art der Radialanschläge 63 angeordnet sind und zwischen beiden eine Puffereinrichtung vorhanden ist, die einen radialen Pufferweg der Drehantriebskomponente bezüglich des Lagers oder umgekehrt zulässt, der jedoch durch die Radialanschläge begrenzt ist.

## Patentansprüche

1. Antriebsstrang für eine portable Maschine, insbesondere eine Hand-Werkzeugmaschine (10), mit mindestens einer Drehantriebskomponente (30), die mit einem Lager (18) um eine Drehachse (38) drehbar gelagert ist, das in einer Lager-Aufnahme (46) aufgenommenen ist, **dadurch gekennzeichnet, dass** für eine radial gepufferte relative Radialauslenkung der Drehantriebskomponente (30) zu der Lager-Aufnahme (46) oder umgekehrt zwischen einerseits dem Lager (18) und andererseits der Lager-Aufnahme (46) und/oder der Drehantriebskomponente (30) eine elastische Puffereinrichtung (50) mit einem sich zumindest über einen Teilumfang des Lagers (18) erstreckenden Radialpuffer (51) angeordnet ist, und dass zur Begrenzung der relativen Radialauslenkung im Bereich des Lagers (18) eine Radialanschlaganordnung (64) mit mindestens einem Radialanschlag (63) vorgesehen ist, der im Ruhezustand des Antriebsstrangs (11) in einem Radialabstand zu einer ihm zugeordneten Anschlagfläche, insbesondere zu dem Lager (18), angeordnet ist und die relative Radialauslenkung der Drehantriebskomponente (30) oder der Lager-Aufnahme (46) im Bereich des Lagers (18) auf einen Radialpufferweg begrenzt.

2. Antriebsstrang nach Anspruch 1, **dadurch gekennzeichnet, dass** die Puffereinrichtung (50) mindestens eine Anschlagausnehmung (62) zur Aufnahme zumindest eines Abschnitts des mindestens einen Radialanschlags (63) aufweist.

3. Antriebsstrang nach Anspruch 1 oder 2, **dadurch gekennzeichnet, dass** die Radialanschlaganordnung (64) mehrere, im wesentlichen ringförmig an einem Außenumfang und/oder einem Innenumfang des Lagers (18) angeordnete und Umfangsabstände zueinander aufweisende, insbesondere in der Art von Nasen ausgestaltete, Radialanschläge (63) aufweist.

4. Antriebsstrang nach einem der vorhergehenden Ansprüche, **dadurch gekennzeichnet, dass** die Puffereinrichtung (50) mehrere, im wesentlichen ringförmig an ihrem Außenumfang und/oder Innenumfang angeordnete und Umfangsabstände zueinander aufweisende Anschlagausnehmungen (62) aufweist.

5. Radialanschläge (63) nach Anspruch 4, **dadurch gekennzeichnet, dass** die Puffereinrichtung (50) zwischen den Anschlagausnehmungen (62) Umfangssegmente (61) aufweist.

6. Radialanschläge (63) nach Anspruch 5, **dadurch gekennzeichnet, dass** die Umfangssegmente (61) im Ruhezustand des Antriebsstrangs (11) einen Radialabstand zu dem Lager (18) und/oder der Lager-Aufnahme (46) und/oder der Drehantriebskomponente (30) aufweisen.

7. Antriebsstrang nach einem der vorhergehenden Ansprüche, **dadurch gekennzeichnet, dass** der mindestens eine Radialanschlag (63) eine Verdrehsicherung für die Puffereinrichtung (50) bezüglich der Lager-Aufnahme (46) und/oder des Lagers (18) und/oder der Drehantriebskomponente (30) bildet.

8. Antriebsstrang nach einem der vorhergehenden Ansprüche, **dadurch gekennzeichnet, dass** die Puffereinrichtung (50) einen insbesondere in Richtung der Drehachse (38) wirksamen Axialpuffer (52) für das Lager (18) und/oder der die Drehantriebskomponente (30) aufweist.

9. Antriebsstrang nach Anspruch 8, **dadurch gekennzeichnet, dass** der Radialpuffer (51) und der Axialpuffer (52) miteinander verbunden, insbesondere einstückig, sind und/oder dass die Radialanschlaganordnung (64) zumindest teilweise zwischen dem Radialpuffer (51) und dem Axialpuffer (52) angeordnet ist.

10. Antriebsstrang nach Anspruch 8 oder 9, **dadurch gekennzeichnet, dass** sich mindestens ein den Radialpuffer (51) und den Axialpuffer (52) verbindender, insbesondere elastischer, Verbindungsabschnitt (54) zwischen dem mindestens einen Radialanschlag (63) und dem Lager (18) oder der Lager-Aufnahme (46) erstreckt.

11. Antriebsstrang nach einem der vorhergehenden Ansprüche, **dadurch gekennzeichnet, dass** die Puffereinrichtung (50) eine Aufnahme (55) für das Lager (18) und/oder die Drehantriebskomponente (30) bildet, wobei der Axialpuffer (52) vorteilhaft einen Endanschlag für das Lager (18) und/oder die Drehantriebskomponente (30) bildet.

12. Antriebsstrang nach einem der vorhergehenden Ansprüche, **dadurch gekennzeichnet, dass** die Radialanschlaganordnung (64) an der Lager-Aufnahme (46) und/oder dem Lager (18) und/oder der Drehantriebskomponente (30) angeordnet ist.

13. Antriebsstrang nach einem der vorhergehenden Ansprüche, **dadurch gekennzeichnet, dass** der Radialpuffer (51) und/oder der Axialpuffer (52) ringförmig ist.

14. Antriebsstrang nach einem der vorhergehenden Ansprüche, **dadurch gekennzeichnet, dass** die Puffereinrichtung (50) buchsenförmig oder ringförmig ist.

15. Portable, insbesondere elektrische, Maschine, insbesondere maschinelles Werkzeug oder Hand-Werkzeugmaschine (10), mit einem Antriebsstrang (11) nach einem der vorhergehenden Ansprüche.
